(19) Europäisches Patentamt
European Patent Office
Office européen des brevets

(11) EP 2 931 782 B1

(12) **EUROPÄISCHE PATENTSCHRIFT**

(45) Veröffentlichungstag und Bekanntmachung des Hinweises auf die Patenterteilung:
**07.12.2016 Patentblatt 2016/49**

(21) Anmeldenummer: **13814825.9**

(22) Anmeldetag: **04.12.2013**

(51) Int Cl.:
***C08G 59/50*** (2006.01) ***C08G 59/62*** (2006.01)

(86) Internationale Anmeldenummer:
**PCT/EP2013/003655**

(87) Internationale Veröffentlichungsnummer:
**WO 2014/090382 (19.06.2014 Gazette 2014/25)**

(54) **EPOXYBASIERTE MASSE FÜR BEFESTIGUNGSZWECKE, DEREN VERWENDUNG UND DIE VERWENDUNG BESTIMMTER KOMPONENTEN**

EPOXY-BASED COMPOUND FOR FASTENING PURPOSES, USE THEREOF AND USE OF GIVEN COMPONENTS

MATIÈRE À BASE D'ÉPOXY À DES FINS DE FIXATION, SON UTILISATION ET L'UTILISATION DE COMPOSANTS DÉTERMINÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2012 DE 102012112053**

(43) Veröffentlichungstag der Anmeldung:
**21.10.2015 Patentblatt 2015/43**

(73) Patentinhaber: **fischerwerke GmbH & Co. KG**
**72178 Waldachtal (DE)**

(72) Erfinder:
- **GRÜN, Jürgen**
  **79268 Bötzingen (DE)**
- **VOGEL, Martin**
  **79286 Glottertal (DE)**
- **SCHLENK, Christian**
  **79211 Denzlingen (DE)**
- **WEINELT, Christian**
  **79312 Emmendingen (DE)**

(56) Entgegenhaltungen:
**WO-A1-2005/090433**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 931 782 B1

**Beschreibung**

Die Erfindung betrifft Zusammensetzungen für eine härtbare Masse für Befestigungszwecke umfassend eine Epoxidkomponente (a), die härtbare Epoxide beinhaltet, und eine Härterkomponente (b), welche eine unter Umsetzung bestimmter Amine erhältliche Mannichbasenformulierung und/oder Mischungen styrolisierter Phenole mit niedermolekularen Aminen umfasst; neue Mannichbasenformulierungen oder Mischungen styrolisierter Phenole mit niedermolekularen Aminen sowie die Verwendung dieser Mannichbasenformulierungen und/oder dieser Mischungen styrolisierter Phenole mit niedermolekularen Aminen, und jeweils insbesondere weiteren Zusätzen, insbesondere in Härterkomponenten für Epoxidharze.

Härtbare Mehr- (wie Zwei-)Komponenten-Massen auf Epoxidbasis sind im Prinzip bekannt. Beispielsweise können sie zur Herstellung von Lacken, von Überzügen, als Formmassen und dergleichen verwendet werden.

Auch im Bereich des Befestigungswesens, beispielsweise zur Befestigung von Verankerungsmitteln, wie Ankerstangen, sind Kunstmörtelmassen auf der Grundlage von Epoxidharzen und Aminhärtern bekannt.

Gesetzliche Regelungen führen dazu, dass immer weniger Amine ohne größere Einschränkungen zur Formulierung von Härtern für Epoxidharze im Befestigungsbereich insbesondere im Bauwesen verwendet werden können. Die verbleibenden Amine ermöglichen oft nur geringen bis schlechten Spielraum zum Einstellen gewünschter Eigenschaften (hohe Verbundspannung, hohe Auszugswerte, schnelle Aushärtung, hohe Temperaturfestigkeit, Aushärtung auch bei niedriger Temperatur, Wasserunempfindlichkeit zur Anwendung im feuchten Substrat (z.B. feuchter Beton), chemische Beständigkeit und dergleichen mehr), die bei den Fertigprodukten zu erreichen sein sollten.

Insbesondere das Erzielen hoher Verbundspannungen, aber auch das Verbessern ein oder mehrerer der übrigen genannten Eigenschaften durch Bereitstellen neuer Komponenten und insbesondere neuer Amin-Komponenten als Härter verbleiben daher als anzustrebende Ziele.

Aufgabe der vorliegenden Erfindung ist daher, neue Epoxidharze für Befestigungszwecke, insbesondere im Bauwesen, zur Verfügung zu stellen, die gegenüber den bisher bekannten Epoxidharzen vorteilhafte Eigenschaften, insbesondere ein oder mehrere der oben als gegenüber bekannten Massen verbesserte Eigenschaften und vor allem hohe Auszugswerte und hohe Verbundspannungen ermöglichen, besonders auch bei erhöhten Temperaturen.

Überraschend wurde nun gefunden, dass diese Aufgabe gelöst werden kann durch die Verwendung von speziellen Mannichbasenformulierungen als Aminhärter, wobei diese Mannichbasenformulierungen unter Verwendung ganz bestimmter Amine hergestellt werden können; und/oder durch Verwendung von Mischungen styrolisierter Phenole mit niedermolekularen Aminen.

Bei den erfindungsgemäß einzusetzenden "bestimmten Aminen" handelt es sich insbesondere um cycloaliphatische oder heterocycloaliphatische Di- oder Polyamine, bei denen mindestens eine, besser aber alle Aminogruppen nicht direkt, sondern über einen Linker über einen Abstand von ein oder mehreren Atomen (Kohlenstoff- und/oder Heteroatome) an den cycloaliphatischen oder heterocycloaliphatischen Kern gebunden sind.

Ohne an diese Erklärung gebunden sein zu wollen, scheint es, dass die zusätzlichen Bewegungsfreiheitsgrade durch die kurzkettigen/nicht allzu langkettigen Linker-Molekülabschnitte, die eine bessere Reaktivität ermöglichen könnten, in Kombination mit den eine stabile, mehr oder weniger rigide Struktur beitragenden cyclischen Bestandteilen der Aminmoleküle zu den gefundenen Vorteilen, wie insbesondere guten Verbundspannungen, beitragen.

Bei den erfindungsgemäß einzusetzenden "bestimmten Aminen" handelt es sich insbesondere um solche der Formel

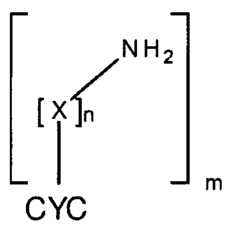

worin

"CYC" ein monocyclischer gesättigter Ring mit 3 bis 12 Ringatomen oder ein kondensiertes di- oder (ferner) polycyclisches gesättigtes Ringsystem mit 6 bis 12 Ringatomen bedeutet, wobei jeweils die Ringatome aus 0 bis 3 Stickstoffatomen, 0 bis 3 Sauerstoffatomen und 0 bis 1 Schwefelatomen und aus Kohlenstoffatomen ausgewählt sind;

X für $CH_2$ steht, wobei je Gruppe $-[X]_n-NH_2$ ein X für NH, O oder S stehen kann, mit der Maßgabe, dass im Falle von X = O oder S n mindestens 2 ist und das O oder S nicht direkt an ein in der Gruppe $-[X]_n-NH_2$ vorhandenes Stickstoffatom gebunden sind und im Falle von einem X = NH n mindestens 2 ist und das X = NH weder direkt an

ein Stickstoffringatom, noch an ein in der betreffenden Gruppe $-[X]_n-NH_2$ vorhandenes Stickstoffatom gebunden ist;

n für 0 bis 5 steht mit der Maßgabe, dass mindestens in einer der Gruppen $-[X]_n-NH_2$ n gleich 1 bis 5 bedeutet; wobei allgemein n = 1 bis 3, insbesondere n = 1 bevorzugt ist; und

m für eine ganze positive Zahl größer oder gleich 2 steht, insbesondere für 2 bis 3;

oder deren Salze.

Hierbei ist der Bestandteil $[X]_n$ einer der genannten Linker.

Bevorzugte Verbindungen dieses Typs sind N,N'-Bis(3-amino-n-propyl)-piperazin (BAPP), 1,3-Bis(aminomethyl)cyclohexan (BAC) oder ferner N-(2-Aminoethyl)piperazin (AEP) oder 3-Aminomethyl-3,5,5-trimethylcyclohexylamin (Isophorondiamin = IPDA).

Besonders bevorzugt ist 1,3-Bis(aminomethyl)cyclohexan (BAC) der Formel

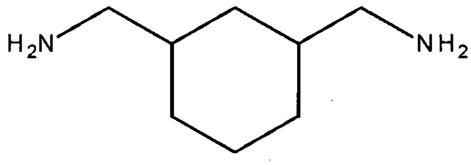

.

Gegenüber bisher eingesetzten Mannichbasenformulierungen aus dem Stand der Technik, die durch Abweichen in mindestens einem, vorzugsweise zwei, insbesondere allen der genannten Parameter nicht unter diese Definition fallen, weisen die erfindungsgemäß herstellbaren Mehr-Komponenten-Mörtel eine deutlich höhere Verbundspannung nach dem Aushärten auch bei höheren Temperaturen, wie bei 80 °C, auf, so dass sie auch bei dieser Temperatur noch verwendbar sind. Darüber hinaus weisen sie auch bei Aushärten bei -5 °C in der Regel bessere, mindestens jedoch gleich gute Verbundspannungen auf im Vergleich mit Mörteln, die unter Verwendung von bisher eingesetzten Mannichbasenformulierungen aus dem Stand der Technik hergestellt werden.

Bei den erfindungsgemäß einzusetzenden Mannichbasen handelt es sich um die Reaktionsprodukte von Phenolen, wie Phenol, Brenzcatechin, Resorcin, Hydrochinon, Hydroxyhydrochinon, Phloroglucin, Pyrogallol, o-Kresol, m-Kresol, p-Kresol, oder Bisphenolen, wie Bisphenol F oder Bisphenol A, insbesondere Phenol, oder von styrolisierten Phenolen, wie nachfolgend definiert, mit den vorstehend definierten "bestimmten Aminen" und Aldehyden oder durch Zersetzung Aldehyde liefernde Verbindungen, vor allem aliphatischen Aldehyden, wie insbesondere Formaldehyd (wobei dieser Begriff auch und durch Zersetzung Formaldehyd liefernde Verbindungen wie Trioxan oder Paraformaldehyd einschließen kann), wobei die Aldehyde vorteilhaft als wässrige Lösung (insbesondere bei erhöhter Temperatur, wie bei 50 bis 90 °C) zu- und umgesetzt werden.

Die Herstellung der Mannichbasen für die kann erfindungsgemäß nach an sich bekannten Verfahren erfolgen, unter Verwendung der oben definierten "bestimmten Amine".

Beispielsweise kann sie, z.B. unter Verwendung der in den Beispielen genannten Amine, wie folgt durchgeführt werden (die konkreten Angaben (gekennzeichnet durch "z.B." und "beispielsweise") beziehen sich auf die in den Beispielen verwendeten Mannichbasen):

Amin (z.B. 2 mol) wird (beispielsweise in einem 250 ml-Dreihalskolben, welcher mit einem Thermometer, einem Tropftrichter und einer Rührvorrichtung versehen ist) vorgelegt. Unter Rühren wird das vorgelegte Amin mit (z.B. 1 mol) Phenol bzw. styrolisiertem Phenol versetzt. Es wird aufgeheizt (z.B. auf 80 °C). Bei der erreichten Temperatur wird (z.B. innerhalb 45 min) Formaldehyd zugetropft (z.B. 0,7 mol als 37%ige Formaldehydlösung), insbesondere unter starkem Rühren. Nach Ende der Zugabe wird weiter aufgeheizt (beispielsweise auf 105 °C) und die Reaktionsbedingungen für einige Zeit (z.B. 120 min) gehalten. Anschließend wird - beispielsweise unter steigendem Vakuum - bei geeigneter Temperatur (z.B. ca. 110 °C) Wasser abdestilliert, wobei, sobald der Druck stark genug vermindert ist (z.B. auf 50 mbar), die Temperatur weiter erhöht wird (z.B. auf 130 °C) und dann eine Zeitlang (z.B. 60 min) gehalten wird. Das erhaltene Produkt ist die Mannichbasenformulierung, die noch weitere Zusätze enthalten kann ausgewählt aus Benzylalkohol, weiterem (styrolisiertem) Phenol, weiterem Amin zur Verdünnung. Diese zusätzlichen Bestandteile der Mannichbasen-Gesamtformulierung können bis max. 15 Gew.-% Benzylalkohol, bis max. 30 Gew.-% freie Phenolkomponente (z.B. auch styrolisiertes Phenol) und bis max. 75 Gew.-% freies Amin sein, bezogen auf die Masse der Mannichbasenformulierung.

Bei den in der Mischung mit styrolisierten Phenolen einzusetzenden "niedermolekularen Aminen" (die als solche

oder in Salzform vorliegen können) handelt es sich um die oben genannten "bestimmten Amine", insbesondere die als bevorzugt genannten, oder um andere niedermolekulare Polyamine (wobei "Polyamine" auch Diamine einschließt), insbesondere oligomere oder monomere aliphatische, cycloaliphatische, cycloheteroaliphatische, aromatische oder araliphatische Diamine, wie insbesondere Xylylendiamine, vor allem m-Xylylendiamin (1,3-Bis(aminomethyl)benzol, MXDA); aliphatische Polyamine, beispielsweise $C_1$-$C_{10}$-Alkandi- oder -polyamine, z.B. 1,2-Diaminoethan, Trimethylhexan-1,6-diamin, Diethylentriamin oder Triethylentetraamin; oligomere Diamine der Formel $H_2N-(CH_2)_i-NH-[(CH_2)_j-NH]_k-(CH_2)_l-NH_2$, worin i, j und l unabhängig voneinander für 2 bis 4 stehen und k für 0, 1 oder 2 steht, insbesondere "Triethylentetramin" (TETA = N,N'-Bis(2-aminoethyl)ethylendiamin) oder Tetraethylenpentamin (TEPA); cycloaliphatische Amine, wie 1,2-Diaminocyclohexan oder Bis(aminomethyl)tricyclodecan (TCD) oder Bis(4-aminocyclohexyl)methan (PACM), oder Aminaddukte; oder Gemischen von 2 oder mehr davon; insbesondere Gemischen eines oder mehrerer araliphatischer Diamine, vor allem m-Xylylendiamin, mit einem oder mehreren anderen Polyaminen, insbesondere BAC, oder vor allem ein oder mehrere araliphatische Diamine, insbesondere m-Xylylendiamin selbst, oder Mischungen von BAC und m-Xylylendiamin.

Überraschend wurde gefunden, dass es möglich ist, anstelle von Mannichbasenformulierungen, bei deren Herstellung Phenole und die "bestimmten Amine" umgesetzt werden, lediglich Mischungen (i) styrolisierter Phenole mit (ii) den "niedermolekularen Aminen" zu verwenden. Auch hier finden sich die genannten Vorteile. Die genannten Mischungen können auch, durch Mischung der Komponenten (i) und (ii) oder diese beinhaltende Mischungen mit weiteren Zusätzen, erst am Einsatzort hergestellt werden. Darüber hinaus ergibt sich als weiterer Vorteil eine gegenüber Mischungen mit Mannich-basen, da ohne weitere Maßnahmen eine geringere Viskosität erzielt werden kann.

Unter styrolisierten Phenolen sind die Umsetzungsprodukte (elektrophile Substitutionsprodukte) von Phenolen (wie Phenol, Brenzcatechin, Resorcin, Hydrochinon, Hydroxyhydrochinon, Phloroglucin, Pyrogallol, o-Kresol, m-Kresol oder p-Kresol, insbesondere Phenol) mit Styrol oder Styrolanalogen, wie Vinyltoluol, Divinylbenzol oder 4-Vinylpyridin, insbesondere mit Styrol, zu verstehen, insbesondere "styrolisiertes Phenol" selbst (Umsetzungsprodukt von Styrol und Phenol; CAS Reg. No. 61788-44-1), das exemplarisch Mischungen von Verbindungen oder einzelnen Verbindungen der folgenden Formeln beinhalten kann:

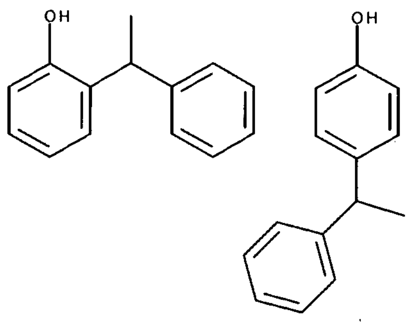
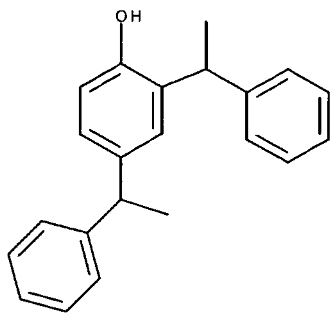

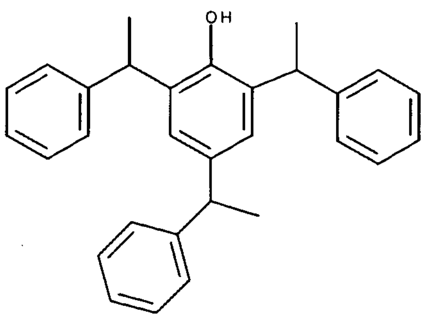

;

oder 2,6-Distyrylphenol, wie auch Oligo- und Polystyrolverbindungsanteile oder - verbindungen (Produkte aus kationischer Polymerisation von Styrolen in Phenolen gewonnene oligo- oder polymere Produkte, beispielsweise der Formel

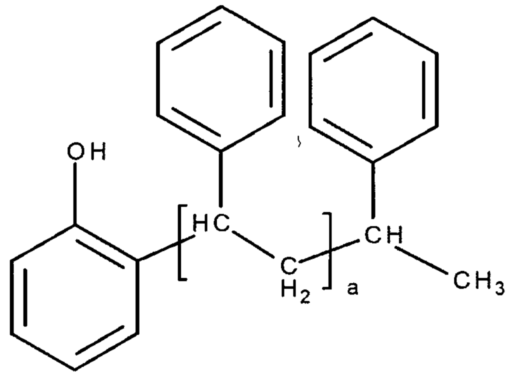

worin a 1 oder eine größere ganze Zahl bedeutet, oder Verzweigungsprodukte - in der Regel handelt es sich um Mischungen mehrerer bei der Reaktion entstehender Produkte (darunter auch mehrfach substituierte Produkte), so dass die genannten Formeln allenfalls als exemplarisch zu verstehen und nicht zwingend - mindestens nicht alle - als solche vertreten sind.

Parameter, soweit sie im Rahmen der vorliegenden Anmeldung dargestellt werden, werden nach dem Fachmann bekannten Verfahren wie folgt ermittelt:

> Für die Herstellung von Probekörpern für Druck- und Zugversuche wird die Epoxidharz-Komponente (Beispiel für eine erfindungsgemäß zu verwendende Komponente (a)) mit der entsprechenden Mannichbase oder Mischung von styrolisiertem Phenol und niedermolekularem Amin (Beispiel für eine erfindungsgemäß zu verwendende Komponente (b)) stöchiometrisch (die Mischungsstöchiometrie ist durch die Epoxid-Äquivalentwerte und die H-Äquivalente rechnerisch (z.B. aus Herstellerangaben) festgelegt) gemischt und während 24 h bei Raumtemperatur (ca. 23 °C) ausgehärtet. Die Epoxidharz-Komponente stellt in den Beispielen hierbei eine Mischung aus 40 Gew.-% Bisphenol A/F-Diglycidylether, 15 Gew.-% Trimethylolpropan-Triglycidylether und 45 Gew.-% Portlandzement dar. Weitere Zusätze sind möglich.

Zur Bestimmung der Druckfestigkeit (nach DIN EN ISO 604) wird ein zylinderförmiger Prüfkörper hergestellt. Der Probekörper hat die Maße: Durchmesser 12 mm, Länge 40 mm. Nach erfolgter Aushärtung wird der Probekörper parallel zu seiner Hauptachse mit einer konstanten Geschwindigkeit von 1 mm/min gestaucht, bis er bricht oder die Spannung oder Längenabnahme einen vorgegebenen Wert erreicht hat. Während des Vorgangs wird die von dem Probekörper aufgenommene Kraft gemessen. Die Druckfestigkeit ist die maximale Druckspannung, die von einem Probekörper während eines Druckversuches getragen wird.

Zur Bestimmung der Zugeigenschaften (Zugfestigkeit - nach DIN EN ISO 527) wird ein Schulterstab nach DIN EN ISO 527-2 Typ 1 BA hergestellt. Zur Prüfung wird der Probekörper in eine Vorrichtung eingeklemmt und entlang seiner Hauptachse mit einer konstanten Geschwindigkeit von 5 mm/min gedehnt, bis er bricht. Während dieses Vorgangs werden die vom Probekörper getragene Belastung und die Längenänderung gemessen. Die Zugfestigkeit ist die Maximalspannung, die der Probekörper während eines Zugversuchs trägt.

Für Auszugsversuche mit Gewindestangen M12 wird, gemäß ETAG 001 PART 5, wie folgt vorgegangen:

> Zunächst werden Bohrlöcher (Durchmesser 14 mm; Tiefe 72 mm) in einen horizontal liegenden Betonprüfkörper (Betontyp C20/25) mit einem Bohrhammer und einem Hammerbohrer eingebracht. Die Bohrlöcher werden mit einem Handausbläser und einer Handbürste gereinigt. Anschließend werden die Bohrlöcher vom Bohrgrund her mit der jeweiligen zu prüfenden härtbaren Masse für Befestigungszwecke (Mannichbase und/oder Mischung styrolisierter Phenole mit den bestimmten Aminen, als Epoxidharz-Komponente eine Mischung aus 40 Gew.-% Bisphenol A/F-Diglycidylether, 15 Gew.-% Trimethylolpropan-Triglycidylether und 45 Gew.-% Portlandzement) zu zwei Dritteln befüllt. Je Bohrloch wird eine Gewindestange von Hand eingedrückt. Der Mörtelüberschuss wird mittels eines Spachtels entfernt. Nach 24 Stunden (Mindestaushärtezeit) bei Raumtemperatur wird die Gewindestange gezogen bis zum Versagen unter Messung der Versagenslast.

Die Messung der Viskositäten wird dabei mit einem Brookfield Rotationsviskosimeter mit Spindel 3 bei 23 °C durchgeführt bei 10 bis 50, vorzugsweise 10 U/min.

Die Messung der Glasübergangstemperatur (ein indirektes Maß u.a. für die Wärmeformbeständigkeit) erfolgt mittels Dynamischer Differenzkalorimetrie (DSC) in Anlehnung an ISO 11357-2 an Proben, die 24 h ausgehärtet werden.

Die Glasübergangs- oder Glasumwandlungstemperatur (Temperatur, oberhalb derer das feste, glasartige in

ein weicheres, gummiartiges Material übergeht), die ein Maß für die Verwendbarkeit der ausgehärteten Mörtel bei hohen Temperaturen darstellt, wird erfindungsgemäß erhöht und somit kann die Einsatzfähigkeit auch bei hohen Temperaturen weiter gesteigert werden.

Der zulässige Temperaturbereich für das ausgehärtete Produkt kann ebenfalls durch Auszugsversuch nach Behandlung mit unterschiedlichen Temperaturen (beispielsweise 24 h Härtung bei Raumtemperatur, bei 50 °C und/oder bei 80 °C) bestimmt werden.

Anstelle des Begriffs "härtbare Masse" wird nachstehend auch teilweise der Begriff "Mörtel" verwendet.

Die erfindungsgemäßen Mischungen können als einkomponentige oder vorzugsweise als mehrkomponentige Systeme (Trennung vor allem von Komponente (b) mit Härter = erfindungsgemäß zu verwendende Mannichbase oder Mischung styrolisiertes Phenol mit niedermolekularem Amin, und Komponente (a) mit Epoxyverbindung(en), z.B. in unterschiedlichen Kompartimenten eines Behältnisses oder in mehreren Behältnissen in einer gemeinsamen Verpackung, so dass sie vor der Verwendung für Befestigungszwecke nicht miteinander reagieren können) eingesetzt werden, beispielsweise als Mehrkomponentenkit.

Unter einem Mehrkomponentenkit (oder -set) ist insbesondere ein Zweikomponentenkit (vorzugsweise ein Zweikomponentenkit mit den Komponenten (a) und (b)), vorzugsweise eine Zwei- oder ferner Mehrkammervorrichtung, zu verstehen, worin die miteinander reaktionsfähigen Komponenten (a) und (b) so enthalten sind, dass sie während der Lagerung nicht miteinander reagieren können, vorzugsweise so, dass sie vor der Anwendung nicht miteinander in Berührung kommen. Möglich sind Patronen. Besonders geeignet sind jedoch Kartuschen oder Folienbeutel mit zwei oder mehr Kammern, oder Behältnisse wie Eimer oder Wannen mit mehreren Kammern oder Sets (z.B. Gebinde) von zwei oder mehr derartigen Behältnissen, wobei zwei oder mehr Komponenten der jeweiligen härtbaren Masse, insbesondere zwei Komponenten (a) und (b) wie oben und unten definiert, jeweils räumlich voneinander getrennt als Kit oder Set vorliegen, bei denen der Inhalt nach Vermischen oder unter Vermischen auf die Anwendungsstelle (insbesondere mittels Geräten zum Auftragen wie Spachteln oder Pinseln oder eines Statikmischers), beispielsweise eine Fläche zum Befestigen von Fasern, Gelegen, Geweben, Composites oder dergleichen, oder in eine Aussparung, wie ein Bohrloch, insbesondere zum Befestigen von Verankerungsmitteln wie Ankerstangen oder dergleichen, verbracht wird; sowie Mehr- oder insbesondere Zweikomponentenkartuschen, in deren Kammern die mehreren oder vorzugsweise zwei Komponenten (insbesondere (a) und (b)) für eine härtbare Masse für Befestigungszwecke mit oben und nachstehend genannten Zusammensetzungen zur Aufbewahrung vor der Nutzung enthalten sind, wobei vorzugsweise auch ein Statikmischer zum entsprechenden Kit gehört. In den Fällen der Folienbeutel und der Mehrkomponentenkartuschen kann auch eine Vorrichtung zum Entleeren zum Mehrkomponentenkit gehören, doch kann diese vorzugsweise auch (beispielsweise zur mehrfachen Verwendung) unabhängig vom Kit sein.

Vor- und nachstehend bedeuten Anteils- oder Gehaltsangaben in Prozent jeweils Gewichtsprozent, soweit nicht anders angegeben.

Beispielsweise ist ein Ein- oder Mehr-, insbesondere Zweikomponentenkit, wie vor- und insbesondere nachstehend beschrieben, eine mögliche bevorzugt zu verwendende Ausführungsform, worin, bezogen auf das Gesamtgewicht der abgefüllten Komponente (b) des Mörtels, die Mannichbasenformulierung einen Anteil von 10 bis 100, vorzugsweise von 30 bis 75 Gew.-% hat.

Ein Ein- oder Mehr-, insbesondere Zweikomponentenkit, worin die Mischung aus styrolisierten Phenolen und niedermolekularen Aminen, bezogen auf das Gesamtgewicht der abgefüllten Komponente (b) des Mörtels, einen Anteil von 10 bis 100, vorzugsweise von 30 bis 75 Gew.-% hat, ist ebenfalls eine bevorzugte Ausführungsform, wie auch dessen Verwendung.

Besonders bevorzugt ist auch ein Mehrkomponentenkit wie vor- und nachstehend beschrieben und insbesondere dessen erfindungsgemäße Verwendung, dadurch gekennzeichnet, dass die Mannichbasenformulierung oder die Mischung aus styrolisierten Phenolen und niedermolekularen Aminen H-Äquivalente im Bereich von 30 bis 105 und eine Viskosität im Bereich von 50 bis bis 10.000 mPa·s, und vorzugsweise einen Gehalt an freien Phenol von 20 Gew.-% oder weniger, beispielsweise von weniger als 1 Gew.-%; z.B. von 0,1 oder weniger Gew.-% bezogen auf die Mannichbasenformulierung oder die Mischung aus styrolisierten Phenolen und niedermolekularen Aminen, hat.

Die Bestimmung der H-Äquivalente (Menge Harz, die 1 mol reaktives H enthält) erfolgt in für den Fachmann bekannter Weise anhand der Formulierung der Reaktionsmischung aus den bekannten H-Äquivalenten der verwendeten Edukte und Rohstoffe, aus denen sie errechnet werden.

Für ein einfaches Amin sei die Errechnung des H-Äquivalents am Beispiel von meta-Xylylendiamin rein exemplarisch erläutert:

$$\text{Allgemeine Formel:} \qquad \text{H-Äq.} = \frac{Mw}{Funktionalität}$$

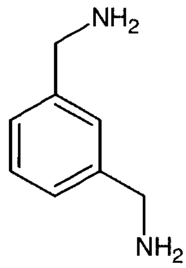

$$\text{eingesetzt: H-Äq.} = \frac{136}{4}\left[\frac{g}{eq}\right] = 34\left[\frac{g}{eq}\right]$$

Die Epoxidäquivalentwerte sind in der Regel auf den Ausgangsmaterialien von den Herstellern angegeben oder sie werden nach bekannten Methoden ermittelt bzw. berechnet. Sie geben die Menge in g Harz an, die 1 Mol Epoxidgruppen enthält.

In einem erfindungsgemäßen bzw. erfindungsgemäß zu verwendenden Mehrkomponentenkit, insbesondere Zweikomponentenkit, wie vor- und nachstehend beschrieben, liegt in einer günstigen Ausführungsform der Erfindung das Volumenverhältnis der Komponenten (a) zu (b) bei 10 zu "1 oder weniger", insbesondere 5 zu "1 oder weniger", vorzugsweise bei 3 zu "1 oder weniger" liegt, wobei vorteilhaft jeweils die Untergrenze bei 1 liegt.

(Bei Mehrkomponentensystemen in Komponente (a) beinhaltete) härtbare Epoxidharze sind vorzugsweise Polyglycidylether von mindestens einem mehrwertigen Alkohol oder Phenol, wie Novolak, oder insbesondere Bisphenol F oder Bisphenol A, oder Gemische von zwei oder mehr dieser Verbindungen, oder andere aromatische oder heteroaromatische Glycidylether mit einer Epoxyfunktionalität von mindestens 2 oder besonders Tri- oder höhere Glycidylether, oder ebenfalls Mischungen von zwei oder mehr aller genannten Alternativen. Die Epoxiddharze haben beispielsweise ein Epoxidäquivalent von 100 bis 2000, vorzugsweise 120 bis 400. Der Anteil an der Epoxidkomponente (a) beträgt >0 bis 100 %, vorzugsweise 10 bis 60 %.

Neben den bisher genannten Bestandteilen können die erfindungsgemäßen, oder erfindungsgemäß zu verwendenden, Mörtel (insbesondere Mehrkomponentenkits), wie vor- und nachstehend erwähnt, in ein oder mehreren ihrer Komponenten (insbesondere Komponente (a), (b) oder (a) und (b)) noch weitere übliche Zusätze beinhalten (wobei dem Fachmann bekannt ist, inwieweit solche Bestandteile mit den in Komponenten eines erfindungsgemäßen oder erfindungsgemäß Mehrkomponentenkits, wie insbesondere eines Zweikomponentenkits mit den Komponenten (a) und (b), nicht vor der Mischung bei der Anwendung in Berührung kommen dürfen).

Als Reaktiwerdünner (die nicht in einer Härterkomponente vorliegen sollten, also vorzugsweise (bei einem Zweikomponentensystem nur) in Komponente (a) mit beinhaltet sind), können Glycidylether von aliphatischen, cycloaliphatischen, araliphatischen oder aromatischen Mono- oder insbesondere Polyalkoholen Verwendung finden, wie Monoglycidylether, z.B. o-Kresylglycidylether, und/oder insbesondere Glycidylether mit einer Epoxy-Funktionalität von mindestens 2, wie 1,4-Butandioldiglycidylether, Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether, oder ferner Mischungen von zwei oder mehr dieser Reaktivverdünner, Verwendung. Besonders bevorzugt sind auch Glycidylsilane, z.B. gemäß WO2011/113533. Die Reaktiwerdünner liegen, bezogen auf das Gesamtgewicht der Epoxidkomponente (a), vorzugsweise in Mengen von 0 bis 60 Gew.-%, insbesondere von 1 bis 30 Gew.-%, vor.

Füllstoffe können in einer oder in mehreren Komponenten beispielsweise eines erfindungsgemäßen Mehrkomponentenkits, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 90 Gew.-%.

Als Füllstoffe finden übliche Füllstoffe, wie hydraulisch härtbare Füllstoffe, wie Gips, Branntkalk, Wassergläser oder aktive Aluminiumhydroxide oder insbesondere Zemente, wie Portlandzement oder Tonerdeschmelzzemente, Kreiden, Quarzmehl, Korund oder dergleichen, die als Pulver, in körniger Form oder in Form von Formkörpern zugesetzt sein können, Verwendung, oder andere, wie beispielsweise in WO 02/079341 und WO 02/079293 genannt (die hier diesbezüglich durch Bezugnahme aufgenommen werden), oder Gemische davon; wobei die Füllstoffe ferner oder insbesondere auch silanisiert sein können, beispielsweise als amino- oder epoxysilanbehandeltes Quarzmehl, wie Silbond AST oder EST® der Fa. Quarzwerke GmbH, als amino- oder glycidyl-silanbehandelte Kieselerde, wie Aktisil AM oder EM® von Hoffmann Mineral, oder amino- oder glycidyl-silan-behandelte pyrogene Kieselsäuren. Die Füllstoffe können in einer oder mehr Komponenten eines erfindungsgemäßen Mehrkomponentenkits, beispielsweise einer oder beiden Komponenten (a) und (b) eines entsprechenden Zweikomponentenkits, vorliegen; der Anteil, bezogen auf das Gesamtgewicht der härtbaren Masse, beträgt vorzugsweise 0 bis 70 Gew.-%, vorzugsweise 5 bis 60 Gew.-%.

Als weitere Zusätze für einzelne oder mehrere Komponenten der erfindungsgemäßen oder erfindungsgemäß zu verwendenden Zusammensetzungen können Weichmacher, nicht reaktive Verdünnungsmittel oder Flexibilisatoren, Stabilisatoren, Katalysagtoren" wie z.B. Härtungskatalysatoren (beispielsweise Salicylsäure), Rheologiehilfsmittel, Thixotropiermittel, Steuerungsmittel für die Reaktionsgeschwindigkeit, z.B. Beschleuniger, Netzmittel, färbende Zusätze, wie Farbstoffe oder insbesondere Pigmente, beispielsweise zum unterschiedlichen Anfärben der Komponenten zur besseren Kontrolle von deren Durchmischung, oder Additive, oder dergleichen, oder Gemische von zwei oder mehr davon, beinhaltet sein. Derartige weitere Zusätze können vorzugsweise insgesamt, bezogen auf die gesamte härtbare Masse, in Gewichtsanteilen von insgesamt 0 bis 30 %, beispielsweise von 0 bis 5 %, vorliegen. Sie können in einzelnen oder mehreren Komponenten, z.B. (a) und/oder (b), oder auch der Mannichbasenformulierung (die damit als "erweiterte Mannichbasenformulierung" zu bezeichnen ist) oder den Mischungen styrolisierter Phenole mit niedermolekularen Aminen selbst zugesetzt sein.

Die Erfindung betrifft in einer besonderen Ausführungsform die Verwendung einer Mannichbase, wie oben beschrieben, zur Herstellung von Härtern für Epoxidharze, insbesondere mit vergrößertem Verarbeitungstemperaturbereich, zur Erhöhung der Belastbarkeit bei Temperaturen oberhalb von Raumtemperatur oder oberhalb von 50 °C, und/oder zur Erhöhung der Verbundspannung im ausgehärteten Zustand, auch bei hohen Temperaturen, beispielsweise bei 70 bis 80 °C, gegenüber anderen Mannichbasen, wie insbesondere solchen, die mit 1,2-Diaminocyclohexan als Amin hergestellt sind.

Eine Erfindungsvariante betrifft die Verwendung oben genannter (insbesondere wie vorstehend weiter als bevorzugt beschriebenen) oder in den Beispielen genannter Mannichbasen in einem oben und unten als bevorzugt gekennzeichneten Mehrkomponentenkit.

Die Erfindung betrifft in einer weiteren Ausführungsform auch eine härtbare Masse oder insbesondere deren Verwendung zur Befestigung, wobei die härtbare Masse eine Epoxidkomponente (a), die härtbare Epoxide beinhaltet (Epoxidkomponente), und eine Härterkomponente (b), welche eine Mischung styrolisierter Phenole mit niedermolekularen Aminen umfasst, beinhaltet.

Die Erfindung betrifft in einer weiteren Ausführungsform auch die Verwendung einer Mischung styrolisierter Phenole mit niedermolekularen Aminen als Härterkomponente bei der Herstellung einer härtbaren Masse mit härtbaren Epoxiden für Befestigungszwecke. Hierbei werden die Mischung styrolisierter Phenole mit niedermolekularen Aminen und die härtbaren Epoxide miteinander, vorzugsweise vor Ort unter gleichzeitiger oder direkt anschließender Fixierung von Befestigungselementen, wie Verankerungselementen, vermischt und zur Reaktion gebracht.

Eine Ausführungsform der Erfindung betrifft auch Verwendung einer nach- und vorstehend beschriebenen Mannichbase zur Herstellung einer Zusammensetzung, insbesondere der Härterkomponente eines die Komponenten einer derartigen Zusammensetzung beinhaltenden Mehrkomponentenkits, zum Befestigen von Verankerungselementen in Bohrlöchern.

Eine Ausführungsform der Erfindung betrifft auch Verwendung einer wie nach- und vorstehend beschriebenen Mischung aus ein oder mehreren styrolisierten Phenolen mit ein oder mehreren niedermolekularen Aminen zur Herstellung einer Zusammensetzung, insbesondere der Härterkomponente eines die Komponenten einer derartigen Zusammensetzung beinhaltenden Mehrkomponentenkits, zum Befestigen von Verankerungselementen in Bohrlöchern.

In einer weiteren Ausführungsform betrifft die Erfindung auch die Verwendung einer Mischung styrolisierter Phenole mit niedermolekularen Aminen als Härterkomponente bei der Herstellung einer härtbaren Masse mit härtbaren Epoxiden für Befestigungszwecke zur Erhöhung der Belastbarkeit bei Temperaturen oberhalb von Raumtemperatur oder oberhalb von 50 °C, und/oder zur Erhöhung der Verbundspannung im ausgehärteten Zustand gegenüber entsprechenden härtbaren Massen ohne die styrolisierten Phenole.

Erhöhte Temperaturbeständigkeit bewirkt beispielsweise bessere Einsatzfähigkeit für Befestigungszwecke auch bei Auftreten höherer Temperaturen z.B. im Bohrlochbereich von Fassadenverankerungen, die starker Sonneneinstrahlung oder sonst erhöhten Temperaturen ausgesetzt sind.

Weitere Zusätze sind möglich, beispielsweise tertiäre Aminoverbindungen, org. Säuren, wie Carbonsäuren, z.B. Salicylsäure, oder Sulfonsäuren, z.B. p-Toluolsulfonsäure,. vorteilhaft ein tert-Aminophenol (welches vorzugsweise Komponente (b) zugesetzt ist), insbesondere eines 2,4,6-Tris(di-$C_1$-$C_6$-alkylamino)phenols, vorzugsweise von 2,4,6-Tris(dimethylamino)phenol, in (insbesondere erfindungsgemäß verwendete Mannichbasenformulierungen beinhaltenden) Härterkomponenten (b) als Bestandteil von (insbesondere Mehr-, wie Zweikomponenten-) Epoxidmörteln.

Die Erfindung betrifft in weiteren zweckmäßigen Ausführungsformen auch die Verwendung von erfindungsgemäßen härtbaren Massen, insbesondere in Form von Mehr-, insbesondere Zweikomponentenkits, zur Befestigung von Fasern, Gelegen, Geweben oder Composites, insbesondere aus hochmoduligen Fasern, vorzugsweise aus Kohlefasern, insbesondere zur Verstärkung von Bauwerken, beispielsweise von Wänden oder Decken oder Böden; oder ferner zur Befestigung von Bauteilen, wie Platten oder Blöcken, z.B. aus Stein, Glas oder Kunststoff, an Bauten oder Bauteilen; jedoch insbesondere zur Befestigung von Verankerungsmitteln, wie Ankerstangen, Bolzen oder dergleichen in Aussparungen, wie Bohrlöchern, wobei man die Komponenten des Mehrkomponentenkits nach vorherigem Mischen und/oder unter Mischen (beispielsweise mittels eines Statikmischers oder durch Zerstören einer Patrone oder eines Folienbeutels

oder durch Mischen von Komponenten aus mehrkammerigen Eimern oder Sets von Eimern) und auf die Oberfläche oder im Falle von Verankerungsmitteln in Aussparungen, wie Bohrlöcher, eines Substrates (z.B. Mauerwerk oder Beton, oder auch Holz oder Metall) verbringt.

Die Erfindung betrifft insbesondere solche Varianten der Ausführungsformen der Erfindung, in denen die Zusammensetzungen keine aliphatischen Monoamine, oder keine (Meth)acrylatcopolymeren oder sie nichtwässrig sind, oder solche Varianten, wo zwei oder mehr dieser Eigenschaften verwirklicht sind.

Beispiele: Die nachfolgenden Beispiele dienen der Illustration der Erfindung:

Verwendete Abkürzungen:

| | |
|---|---|
| AEP | N-(2-Aminoethyl)piperazin |
| BAC | 1,3-Bis(aminomethyl)cyclohexan |
| BAPP | N,N'-Bis(3-amino-n-propyl)-piperazin |
| DCH (Vergleich) | 1,2-Diaminocyclohexan |
| IPDA | 3-Aminomethyl-3,5,5-trimethylcyclohexylamin |
| MXDA | m-Xylylendiamin |
| TETA | Triethylentetramin |
| $T_g$ | Glasübergangstemperatur |

Beispiel 1: Mit erfindunasaemäß zu verwendenden Mannichbasen-Formulierungen? und als Vergleichsversuche mit Mannichbasen, die unter Verwendung im Befestigungswesen bereits bekannter Amine erhalten wurden, erhaltene Mörtel:

Unter Verwendung der Amine AEP, BAC, BAPP, IPDA und als Vergleich DCH wurden wie eingangs beschrieben die entsprechenden Mannichbasenformulierungen hergestellt. Diese wurden in stöchiometrischer Menge mit Epoxidharz-Komponente und Portlandzement gemäß nachfolgender Tabelle vermischt.

Die in der Tabelle angegebene Menge eines Epoxidharzes auf Basis Bisphenol A/F mit einer Viskosität von 6000 - 8000 mPas / 25 °C und einem Epoxidäquivalent von 175 wird mit der ebenfalls dort angegebenen Menge eines weiteren Epoxidharzes auf Basis Trimethylolpropan mit einer Viskosität von 120 - 180 mPas / 25 °C und einem Epoxidäquivalent von 140 gemischt. Die Mischung, bestehend aus den beiden Epoxidharzen und dem darin dispergierten Füllstoff wird mit der dem Wasserstoffäquivalent entsprechenden Menge der jeweiligen Mannich-Base wie in den nachfolgenden Tabellen aufgestellt (z.B. hier stöchiometrisch, aber auch Über- oder Untervernetzung kann gewählt werden) bei RT für 24 h gehärtet.

Die Mörtelkomponente A (entsprechend (a) im allgemeinen Teil) wird nach folgender Rezeptur hergestellt:

| Bezeichnung | EP-Äquivalent | Wasserstoffäquivalent | Einwaage [g] | Gew.Prozent [%] |
|---|---|---|---|---|
| EP-Harz auf Basis Bisphenol A/F | 175 | - | 20,00 | 40,00 |
| EP-Harz auf Basis Trimethylolpropan | 140 | - | 7,50 | 15,00 |
| Zement | - | - | 22,50 | 45,00 |
| **Summe** | | | **50,00** | **100,00** |

(1) Entsprechend werden folgende Mengen an Komponente B bezogen auf 50 g von Komponente A eingewogen (Mannich-Basen auf Basis Phenol und entsprechendem Amin in Klammern):

| Bezeichnung | Wasserstoffäquivalent | Einwaage [g] |
|---|---|---|
| MB 1 (BAC) | 53 | 8,90 |
| MB 2 (BAPP) | 69 | 11,58 |
| MB 3 (AEP) | 68 | 11,41 |
| MB 4 (IPDA) | 61 | 10,24 |
| MB 5 (DCH nicht erfindungsgemäßes Vergleichsbeispiel) | 45 | 7,55 |

(2) Alternativ werden folgende Mengen an Komponente B bezogen auf 50 g von Komponente A eingewogen (Mannich-Basen auf Basis styrolisiertes Phenol und entsprechendem Amin in Klammern):

| **Bezeichnung** | **Wasserstoffäquivalent** | **Einwaage [g]** |
|---|---|---|
| MB 6 (BAC) | 77 | 12,93 |
| MB 7 (BAPP) | 92 | 15,44 |
| MB 8 (AEP) | 101 | 16,95 |
| MB 9 (IPDA) | 84 | 14,10 |
| MB 10 (DCH nicht erfindungsgemäßes Vergleichsbeispiel) | 69 | 11,58 |

Die hier aufgelisteten Komponenten werden nacheinander eingewogen und sorgfältig gemischt. Im Anschluss daran wird diese Mischung in die entsprechenden Formen gefüllt und bei RT für 24 h gehärtet und danach geprüft.

Es werden folgende Messwerte erhalten:

Bei Mischungen mit Komponente B gemäß (1) mit Mannichbase aus Phenol selbst und dem jeweils genannten Amin:

| Amin | Druckfestigkeit [MPa] | Zugfestigkeit ([MPa] | $T_g$ [°C] | Viskosität [mPas] | Auszug [kN] | Verbundspannung [n/mm$^2$] |
|---|---|---|---|---|---|---|
| BAC **(MB1)** | 81 | 39 | 52 | 314 | 87 | 32 |
| BAPP **(MB2)** | 75 | 39 | 48 | 774 | 53 | 20 |
| AEP **(MB3)** | 69 | 29 | 50 | 497 | 70 | 26 |
| IPDA **(MB4)** | 66 | 11 | 44 | 1990 | 81 | 29 |
| DCH **(MB5)** | 66 | 6 | 43 | 203 | 58 | 22 |

Es zeigen sich gegenüber dem Vergleich mit dem nicht-erfindungsgemäßen DCH erhöhte Auszugs- und Verbundspannungswerte und erhöhte $T_g$-Werte (als indirektes Maß für erhöhte Wärmeformbeständigkeit) sowie erhöhte Zugfestigkeit in allen und erhöhte Druckfestigkeit in fast allen Fällen, bei vergleichbaren Viskositäten.

Bei Mischungen mit Komponente B gemäß (2) aus mit Mannichbase aus styrolisiertem Phenol und dem jeweils genannten Amin

| Amin | Druckestigkeit [MPa] | Zugfestigkeit ([MPa] | $T_g$ [°C] | Viskosität [mPas] | Auszug [kN] | Verbundspannung [n/mm$^2$] |
|---|---|---|---|---|---|---|
| BAC **(MB6)** | 73 | 20 | 50 | 1259 | 83 | 28 |
| BAPP **(MB7)** | 68 | 30 | 50 | 2108 | 77 | 28 |
| AEP **(MB8)** | 59 | 5 | 47 | 2200 | 76 | 27 |
| IPDA **(MB9)** | 40 | 6 | 37 | 9427 | 52 | 19 |
| DCH **(MB10)** | 54 | 5 | 32 | 1720 | 34 | 12 |

Es zeigen sich gegenüber dem Vergleich mit dem nicht-erfindungsgemäßen DCH erhöhte Auszugs- und Verbundspannungswerte und erhöhte $T_g$-Werte (als indirektes Maß für erhöhte Wärmeformbeständigkeit) sowie erhöhte oder gleiche Zugfestigkeit in allen und erhöhte Druckfestigkeit in fast allen Fällen, bei vergleichbaren Viskositäten.

Beispiel 2: Mit erfindungsgemäßen und erfindungsgemäß zu verwendenden Mischungen aus styrolisiertem Phenol und niedermolekularem Amin erhaltene Mörtel:

(3) Alternativ werden folgende Mengen an Komponente B bezogen auf 50 g von Komponente A wie oben beschrieben eingewogen: (Härter ohne Mannich-Basen)

| Bezeichnung | Wasserstoffäquivalent | Einwaage [g] |
|---|---|---|
| Abmischung 1 (MXDA / BAC) | 47 | 7,89 |
| Abmischung 2 (BAC) | 47 | 7,89 |
| Abmischung 3 (MXDA) | 45 | 7,55 |
| Abmischung 4 (IPDA) | 57 | 9,57 |
| Abmischung 5 (TETA) | 32 | 5,37 |

Unter Verwendung der Amine BAC in Mischung mit MXDA (14 Gewichtsteile BAC auf 1 Teil MXDA); BAC; MXDA; IPDA; und TETA wurde jeweils eine Mischung aus dem jeweiligen Amin (ohne Gegenwart von Mannichbase), styrolisiertem Phenol (Novares LS 500) und Salicylsäure im Mischungsverhältnis 75:20:5 (w/w) hergestellt. Diese wurden in (hinsichtlich der Funktionalitäten Amino und Epoxy) stöchiometrischer Menge mit Komponente A (siehe Tabelle in Beispiel 1) vermischt und als "härtbare Masse" wie oben beschrieben für die Parameterbestimmung verwendet.

Mit den eingangs beschriebenen Methoden zur Parameterbestimmung wurden die folgenden Ergebnisse erhalten:

| Amin | Druckfestigkeit [MPa] | Zugfestigkeit ([MPa] | $T_g$[°C] | Viskosität [mPas] | Auszug [kN] | Verbundspannung [n/mm$^2$] |
|---|---|---|---|---|---|---|
| BAC+ MXDA | 83 | 30 | 51 | 72 | 96 | 34 |
| BAC | 83 | 38 | 50 | 72 | 82 | 30 |
| MXDA | 84 | 39 | 50 | 58 | 90 | 33 |
| IPDA | 66 | 12 | 44 | 311 | 76 | 28 |
| TETA | 70 | 36 | 45 | 140 | 46 | 17 |

Es finden sich hierbei sehr gute Werte für die genannten Mischungen, die großenteils sogar höher liegen als bei Verwendung von Mannichbasen in Beispiel 1

**Patentansprüche**

**1.** Zusammensetzung für eine härtbare Masse für Befestigungszwecke umfassend eine Epoxidkomponente (a), die härtbare Epoxide beinhaltet, und eine Härterkomponente (b), welche

(i) eine unter Umsetzung eines oder mehrerer bestimmter Amine mit Phenolen und Aldehyden erhältliche Mannichbasenformulierung,
wobei die bestimmten Amine solche der Formel

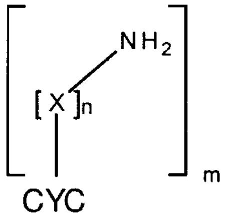

sind, worin

"CYC" ein monocyclischer gesättigter Ring mit 3 bis 12 Ringatomen oder ein kondensiertes dicyclisches gesättigtes Ringsystem mit 6 bis 12 Ringatomen bedeutet, wobei jeweils die Ringatome aus 0 bis 2 Stickstoffatomen, 0 bis 1 Sauerstoffatomen und 0 bis 1 Schwefelatomen ausgewählt und aus Kohlenstoffatomen ausgewählt sind;
X für $CH_2$ steht, wobei je Gruppe $-[X]_n-NH_2$ ein X für NH, O oder S stehen kann, mit der Maßgabe, dass im Falle von einem X = O oder S in der betreffenden Gruppe $-[X]_n-NH_2$ n mindestens 2 ist und das O oder S nicht an direkt an ein Stickstoffatom gebunden sind und im Falle von einem X = NH n mindestens 2 ist und das X = NH weder direkt an ein Strickstoffringatom, noch an ein in der betreffenden Gruppe $-[X]_n-NH_2$ vorhandenes Stickstoffatom gebunden ist;
n für 0 bis 5 steht mit der Maßgabe, dass mindestens in einer der Gruppen - $[X]_n-NH_2$ n gleich 1 bis 5 bedeutet; und
m für eine ganze positive Zahl größer oder gleich 2 steht, insbesondere für 2 bis 3;

oder deren Salze,
und/oder
(ii) Mischungen styrolisierter Phenole mit ein oder mehreren niedermolekularen Aminen umfasst, bei denen es sich um Di- oder Polyamine, oder Salze davon, handelt.

2. Zusammensetzung nach Anspruch 1, wobei im Fall (ii) das oder die niedermolekularen Amine solche der in Anspruch 1 unter (i) gezeigten Formel sind.

3. Zusammensetzung nach Anspruch 1, **dadurch gekennzeichnet, dass** im Fall (ii) das oder die niedermolekularen Amine Xylylendiamine, aliphatische Polyamine, oligomere Diamine der Formel $H_2N-(CH_2)_i-NH-[(CH_2)_j-NH]_k-(CH_2)_l-NH_2$, worin i, j und l unabhängig voneinander für 2 bis 4 stehen und k für 0, 1 oder 2 steht; cycloaliphatische Amine; oder Aminaddukte; oder Gemische von 2 oder mehr davon; sind.

4. Zusammensetzung nach Anspruch 1, wobei im Falle (ii) das oder die niedermolekularen Amine aus m-Xylylendiamin, 1,3-Bis(aminomethyl)cyclohexan (BAC), Triethylentetraamin und Isophorondiamin, oder Mischungen von zwei oder mehr davon, ausgewählt sind., insbesondere aus BAC und m-Xylylendiamin oder Mischungen davon; sind.

5. Zusammensetzung nach einem der Ansprüche 1 bis 4, wobei im Falle (i) das oder die bestimmten Amine ausgewählt sind aus 1,3-Bis(aminomethyl)-cyclohexan (BAC), 4-(2-Aminoethyl)-piperazin, N,N'-Bis(3-amino-n-propyl)-piperazin, und Mischungen von zwei oder mehr davon, wobei BAC besonders bevorzugt ist.

6. Zusammensetzung nach einem der Ansprüche 1 bis 5 als Bohrlochmasse.

7. Zusammensetzung nach einem der Ansprüche 1 bis 6, insbesondere 1, 5 und 6, wobei im Falle (i) bei der Mannichbasenherstellung als Phenole styrolisiertes Phenol oder Phenol und als Aldehyde Formaldehyd oder ein Vorläufer davon verwendet werden.

8. Zusammensetzung nach Anspruch 7, **dadurch gekennzeichnet, dass** der Gehalt an freiem Phenol kleiner als 1 Gew.-% ist.

9. Zusammensetzung nach einem der Ansprüche 1 bis 8 in Form eines Mehrkomponentenkits, insbesondere Zweikomponentenkits, wobei mindestens eine Epoxidkomponente (a) und eine Härterkomponente (b) in unterschiedlichen Kompartimenten eines Behältnisses oder in mehreren Behältnissen in einer gemeinsamen Verpackung untergebracht sind.

**10.** Mehrkomponentenkit, insbesondere Zweikomponentenkit, nach Anspruch 9, **dadurch gekennzeichnet, dass** das Gewichtsverhältnis der Komponenten (a) zu (b) bei 10 zu 1 oder weniger, insbesondere 5 zu 1 oder weniger, vorzugsweise bei 3 zu 1 oder weniger, wobei vorteilhaft jeweils die Untergrenze bei 1 zu 1 liegt.

**11.** Zusammensetzung nach einem der Ansprüche 1 bis 9 oder Mehrkomponentenkit nach Anspruch 10, **dadurch gekennzeichnet, dass** im Falle (i) der Anteil der Mannichbase, bezogen auf das Gesamtgewicht der abgefüllten Komponente (b), einen Anteil von 10 bis 100 Gew.-%, vorzugsweise von 30 bis 75 Gew.-% hat.

**12.** Zusammensetzung nach einem der Ansprüche 1 bis 11, **dadurch gekennzeichnet, dass** im Falle (ii) der Anteil der Mischung aus styrolisierten Phenolen und niedermolekularen Aminen, bezogen auf das Gesamtgewicht der abgefüllten Komponente (b), einen Anteil von 10 bis 100 Gew.-%, vorzugsweise von 30 bis 75 Gew.-%, hat.

**13.** Verwendung einer Zusammensetzung nach einem der Ansprüche 1 bis 12, insbesondere in Form eines Zwei-Komponentenkits, zur Befestigung von Verankerungselementen, **dadurch gekennzeichnet, dass** man dessen Komponenten mischt und in Oberflächenvertiefungen, insbesondere Bohrlöcher, eines Substrates einbringt und gleichzeitig oder anschließend die Verankerungselemente einbringt.

**14.** Verwendung einer Zusammensetzung nach einem der Ansprüche 1 bis 12, insbesondere in Form eines Zweikomponentenkits, zur Befestigung von Fasern, Gelegen, Geweben oder Composites zur Verstärkung von Bauwerken.

**15.** Verwendung einer wie in einem der Ansprüche 1, 5 oder 7 beschriebenen Mannichbase zur Herstellung einer Zusammensetzung, insbesondere der Härterkomponente eines die Komponenten einer derartigen Zusammensetzung beinhaltenden Mehrkomponentenkits, zum Befestigen von Verankerungselementen in Bohrlöchern.

**16.** Verwendung einer wie in einem der Ansprüche 1, 2, 3, 4 oder 7 beschriebenen Mischung aus ein oder mehreren styrolisierten Phenolen mit ein oder mehreren niedermolekularen Aminen zur Herstellung einer Zusammensetzung, insbesondere der Härterkomponente eines die Komponenten einer derartigen Zusammensetzung beinhaltenden Mehrkomponentenkits, zum Befestigen von Verankerungselementen in Bohrlöchern.

## Claims

**1.** Composition for a curable substance for fixing purposes, comprising an epoxy component (a), which contains curable epoxides, and a hardener component (b), which comprises

(i) a Mannich base formulation obtainable by reaction of one or more specific amines with phenols and aldehydes, the specific amines being those of the formula

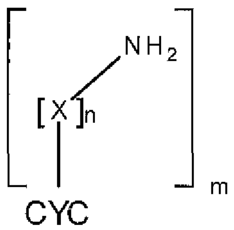

wherein

"CYC" is a monocyclic saturated ring having from 3 to 12 ring atoms or a condensed dicyclic saturated ring system having from 6 to 12 ring atoms, wherein in each case the ring atoms are selected from 0 to 2 nitrogen atoms, 0 to 1 oxygen atoms and 0 to 1 sulfur atoms and from carbon atoms;
X is $CH_2$, wherein for each group $-[X]_n-NH_2$ one X can be NH, O or S, with the proviso that in the case of an X = O or S, in the group $-[X]_n-NH_2$ in question n is at least 2 and the O or S is not bonded directly to a nitrogen atom and in the case of one X = NH, n is at least 2 and the X = NH is bonded neither directly to a nitrogen ring atom nor to a nitrogen atom present in the group $-[X]_n-NH_2$ in question;
n is from 0 to 5, with the proviso that at least in one of the groups $-[X]_n-NH_2$ n is from 1 to 5; and
m is a whole positive number greater than or equal to 2, especially 2 to 3;

or salts thereof,
and/or
(ii) mixtures of styrenated phenols with one or more low molecular weight amines, which are di- or poly-amines, or salts thereof.

**2.** Composition according to claim 1, wherein, in the case of (ii), the low molecular weight amine(s) are those of the formula shown under (i) in claim 1.

**3.** Composition according to claim 1, **characterised in that**, in the case of (ii), the low molecular weight amine(s) are xylylenediamines, aliphatic polyamines, oligomeric diamines of the formula $H_2N-(CH_2)_i-NH-[(CH_2)_j-NH_k-(CH_2)_l-NH_2$, wherein i, j and l are each independently of the others from 2 to 4 and k is 0, 1 or 2; cycloaliphatic amines; or amine adducts; or mixtures of two or more thereof.

**4.** Composition according to claim 1, wherein, in the case of (ii), the low molecular weight amine(s) are selected from m-xylylenediamine, 1,3-bis(aminomethyl)-cyclohexane (BAC), triethylenetetraamine and isophoronediamine, or mixtures of two or more thereof, especially from BAC and m-xylylenediamine or mixtures thereof.

**5.** Composition according to any one of claims 1 to 4, wherein, in the case of (i), the specific amines(s) are selected from 1,3-bis(aminomethyl)cyclohexane (BAC), 4-(2-aminoethyl)piperazine, N,N'-bis(3-amino-n-propyl)piperazine, and mixtures of two or more thereof, with special preference being given to BAC.

**6.** Composition according to any one of claims 1 to 5 as a substance for drilled holes.

**7.** Composition according to any one of claims 1 to 6, especially 1, 5 and 6, wherein, in the case of (i), for the Mannich base preparation there are used as phenols styrenated phenol or phenol and as aldehydes formaldehyde or a precursor thereof.

**8.** Composition according to claim 7, **characterised in that** the content of free phenol is less than 1 % by weight.

**9.** Composition according to any one of claims 1 to 8 in the form of a multi-component kit, especially a two-component kit, wherein at least an epoxy component (a) and a hardener component (b) are housed in different compartments of a container or in a plurality of containers in a common packaging.

**10.** Multi-component kit, especially a two-component kit, according to claim 9, **characterised in that** the ratio by weight of components (a) to (b) is 10 to 1 or less, especially 5 to 1 or less, preferably 3 to 1 or less, the lower limit advantageously being 1 to 1 in each case.

**11.** Composition according to any one of claims 1 to 9 or multi-component kit according to claim 10, **characterised in that**, in the case of (i), the proportion of Mannich base, based on the total weight of the component (b) introduced has a proportion of from 10 to 100 % by weight, preferably from 30 to 75 % by weight.

**12.** Composition according to any one of claims 1 to 11, **characterised in that**, in the case of (ii), the proportion of the mixture of styrenated phenols and low molecular weight amines, based on the total weight of the component (b) introduced, has a proportion of from 10 to 100 % by weight, preferably from 30 to 75 % by weight.

**13.** Use of a composition according to any one of claims 1 to 12, especially in the form of a two-component kit, for the fixing of anchoring elements, **characterised in that** the components thereof are mixed and introduced into surface hollows, especially drilled holes, in a substrate and the anchoring elements are introduced simultaneously or subsequently.

**14.** Use of a composition according to any one of claims 1 to 12, especially in the form of a two-component kit, for the fixing of fibres, non-crimp fabrics, woven fabrics or composites for reinforcement of buildings.

**15.** Use of a Mannich base as described in any one of claims 1, 5 and 7 in the production of a composition, especially the hardener component of a multi-component kit containing the components of such a composition, for the fixing of anchoring elements in drilled holes.

**16.** Use of a mixture of one or more styrenated phenols with one or more low molecular weight amines, as described

in any one of claims 1, 2, 3, 4 and 7, in the production of a composition, especially the hardener component of a multi-component kit containing the components of such a composition, for the fixing of anchoring elements in drilled holes.

## Revendications

1. Composition pour une masse durcissable à des fins de fixation, comprenant une composante époxyde (a), qui contient des époxydes durcissables, et une composante de durcisseur (b) qui comprend

   (i) une formulation de base de Mannich pouvant être obtenue par réaction d'une ou plusieurs amines déterminées avec des phénols et des aldéhydes,
   les amines déterminées étant celles de formule

   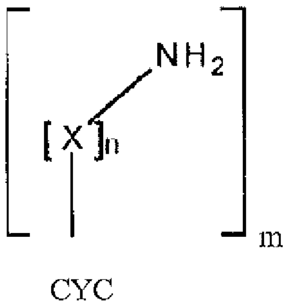

   dans laquelle

   « CYC » représente un cycle monocyclique saturé de 3 à 12 atomes de cycle ou un système cyclique bicyclique saturé condensé de 6 à 14 atomes de cycle, les atomes de cycle étant respectivement choisis parmi 0 à 2 atomes d'azote, 0 à 1 atome d'oxygène et 0 à 1 atome de soufre et choisis parmi des atomes de carbone ;
   X représente $CH_2$, sachant que par groupe $-[X]_n-NH_2$ un X peut représenter NH, O ou S, à la condition que dans le cas d'un X = O ou S dans le groupe $-[X]_n-NH_2$ concerné n soit au moins égal à 2 et que l'O ou le S ne soit pas directement lié à un atome d'azote, et que dans le cas d'un X = NH n soit au moins égal à 2 et le X = NH n'est lié directement ni à un atome d'azote de cycle, ni à un atome d'azote présent dans le groupe $-[X]n-NH_2$ concerné ;
   n représente 0 à 5, à la condition qu'au moins dans un des groupes $-[X]_n-NH_2$ n ait une valeur de 1 à 5 ; et m représente un nombre entier positif supérieur ou égal à 2, en particulier 2 à 3 ;

   ou leurs sels,
   et/ou
   (ii) des mélanges de phénols styrénisés avec une ou plusieurs amines de faibles masses moléculaires, lesquelles sont des di- ou polyamines, ou des sels de celles-ci.

2. Composition selon la revendication 1, dans laquelle, dans le cas (ii), la ou les amines de faibles masses moléculaires sont celles de la formule montrée sous (i) dans la revendication 1.

3. Composition selon la revendication 1, **caractérisée en ce que** dans le cas (ii), la ou les amines de faibles masses moléculaires sont des xylylènediamines, des polyamines aliphatiques, des diamines oligomères de formule $E_2N-(CH_2)_i-NH-[(CH_2)_j-NH]_k-(CH_2)_l-NH_2$, dans laquelle i, j et l représentent 2 à 4 indépendamment l'un de l'autre et k représente 0, 1 ou 2, des amines cycloaliphatiques, des produits d'addition d'amines ou des mélanges de deux ou plusieurs de ceux-ci.

4. Composition selon la revendication 1, dans laquelle, dans le cas (ii), la ou les amines de faibles masses moléculaires sont choisies parmi la m-xylylénediamine, le 1,3-bis(aminométhyl)cyclohexane (BAC), la triéthylénetétraamine et l'isophoronediamine, ou des mélanges de deux ou plusieurs de ceux-ci, en particulier sont composées de BAC et de m-xylylènediamine ou de mélanges de ceux-ci.

**5.** Composition selon l'une des revendications 1 à 4, dans laquelle, dans le cas (i), la ou les amines déterminées sont choisies parmi le 1,3-bis(aminométhyl)-cyclohexane (BAC), la 4-(2-aminoéthyl)-pipérazine, la N,N'-bis(3-amino-n-propyl)-pipérazine, et des mélanges de deux ou plusieurs de ceux-ci, le BAC étant particulièrement préféré.

**6.** Composition selon l'une des revendications 1 à 5 utilisée comme masse de trou de forage.

**7.** Composition selon l'une des revendications 1 à 6, en particulier 1, 5 et 6, dans laquelle, dans le cas (i), lors de la production de base de Mannich, on utilise comme phénols du phénol styrénisé ou du phénol et comme aldéhydes du formaldéhyde ou un précurseur de celui-ci.

**8.** Composition selon la revendication 7, **caractérisée en ce que** la teneur en phénol libre est inférieure à 1 % en poids.

**9.** Composition selon l'une des revendications 1 à 8 sous la forme d'un kit à plusieurs composantes, en particulier d'un kit à deux composantes, dans lequel au moins une composante époxyde (a) et une composante de durcisseur (b) sont logées dans différents compartiments d'un récipient ou dans plusieurs récipients dans un emballage commun,

**10.** Kit à plusieurs composantes, en particulier kit à deux composantes, selon la revendication 9, **caractérisé en ce que** le rapport en poids de la composante (a) à la composante (b) est de 10 à 1 ou moins, en particulier de 5 à 1 ou moins, de préférence de 3 à 1 ou moins, la limite inférieure étant dans chaque cas avantageusement de 1 à 1.

**11.** Composition selon l'une des revendications 1 à 9 ou kit à plusieurs composantes selon la revendications 10, caractérisé(e) en ce que, dans le cas (i), la proportion de la base de Mannich, par rapport au poids total de la composante (b) emballée, est de 10 à 100 % en poids, de préférence de 30 à 75 % en poids.

**12.** Composition selon l'une des revendications 1 à 11, **caractérisée en ce que**, dans le cas (ii), la proportion du mélange de phénols styrénisés et d'amines de faible masse moléculaire, par rapport au poids total du composant (b) emballé, est de 10 à 100 % en poids, de préférence de 30 à 75 % en poids.

**13.** Utilisation d'une composition selon l'une des revendications 1 à 12, en particulier sous la forme d'un kit à deux composantes, pour la fixation d'éléments d'ancrage, **caractérisée en ce que** l'on mélange ses composantes, que l'on introduit le mélange dans des creux de surface, en particulier des trous de forage, d'un substrat et que l'on introduit en même temps ou ensuite les éléments d'ancrage.

**14.** Utilisation d'une composition selon l'une des revendications 1 à 12, en particulier sous la forme d'un kit à deux composantes, pour la fixation de fibres, de non-tissés, de tissus ou de composites pour renforcer des constructions.

**15.** Utilisation d'une base de Mannich telle que décrite dans l'une des revendications 1, 5 ou 7 pour produire une composition, en particulier la composante de durcisseur d'un kit à plusieurs composantes contenant les composantes d'une telle composition, pour fixer des éléments d'ancrage dans des trous de forage.

**16.** Utilisation d'un mélange tel que décrit dans l'une des revendications 1, 2, 3, 4 ou 7 d'un ou plusieurs phénols styrénisés avec une ou plusieurs amines de faible masse moléculaire pour produire une composition, en particulier la composante de durcisseur d'un kit à plusieurs composantes contenant les composantes d'une telle composition, pour fixer des éléments d'ancrage dans des trous de forage.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011113533 A
- WO 02079341 A
- WO 02079293 A